Europäisches Patentamt

European Patent Office

Office européen des brevets

(19)

(11) Veröffentlichungsnummer : **0 024 494**
**B1**

# (12) EUROPÄISCHE PATENTSCHRIFT

(45) Veröffentlichungstag der Patentschrift :
15.12.82

(21) Anmeldenummer : 80103516.3

(22) Anmeldetag : 23.06.80

(51) Int. Cl.³ : **H 02 B 13/02**

(54) **Elektrisches Schaltfeld.**

(30) Priorität : 06.07.79 DE 2927466

(43) Veröffentlichungstag der Anmeldung :
**11.03.81 (Patentblatt 81/10)**

(45) Bekanntmachung des Hinweises auf die Patenterteilung : **15.12.82 Patentblatt 82/50**

(84) Benannte Vertragsstaaten :
**AT CH DE FR GB IT LI SE**

(56) Entgegenhaltung :
**EP A 0 005 208**

(73) Patentinhaber : **SIEMENS AKTIENGESELLSCHAFT**
**Berlin und München**
**Postfach 22 02 61**
**D-8000 München 22 (DE)**

(72) Erfinder : **Adolph, Erich**
**Dantestrasse 3**
**D-6000 Frankfurt/Main (DE)**
Erfinder : **Bayrak, Ünal**
**Adalbert-Stifter-Strasse 45**
**D-6451 Bischofsheim (DE)**
Erfinder : **Prohl, Robert**
**Weiherstrasse 5**
**D-6369 Nidderau 5 (DE)**
Erfinder : **Stecker, Walter**
**Eichenweg 25**
**D-6056 Heusenstamm (DE)**

Jouve, 18, rue St-Denis, 75001 Paris, France

Elektrisches Schaltfeld

Die Erfindung bezieht sich auf ein elektrisches Schaltfeld nach dem Oberbegriff des Anspruches 1, (EP-A-0 005 208 — prioritätsältere europäische Anmeldung).

Aufgabe der Erfindung ist es, das elektrische Schaltfeld der im Oberbegriff des Anspruches 1 genannten Gattung noch wartungsfreundlicher zu gestalten.

Die Aufgabe wird erfindungsgemäß durch die im kennzeichnenden Teil des Anspruches 1 angegebene Ausbildung gelöst.

Mit der Absenkbarkeit der Oberseite des Aufsatzes ist zugleich auch das von ihr getragene, sich zwischen den Schraubanschlußklemmen und dem Trennschalter erstreckende Mittelteil des Schaltfeldes absenkbar. Das eröffnet eine noch bessere Justierbarkeit und Zugängigkeit des Schaltfeld-Mittelteils.

Zweckmäßige Weiterbildungen des Erfindungsgegenstandes sind in den Ansprüchen 2 bis 4 angegeben.

Ein Ausführungsbeispiel der Erfindung ist in der Zeichnung rein schematisch dargestellt, Es zeigen :

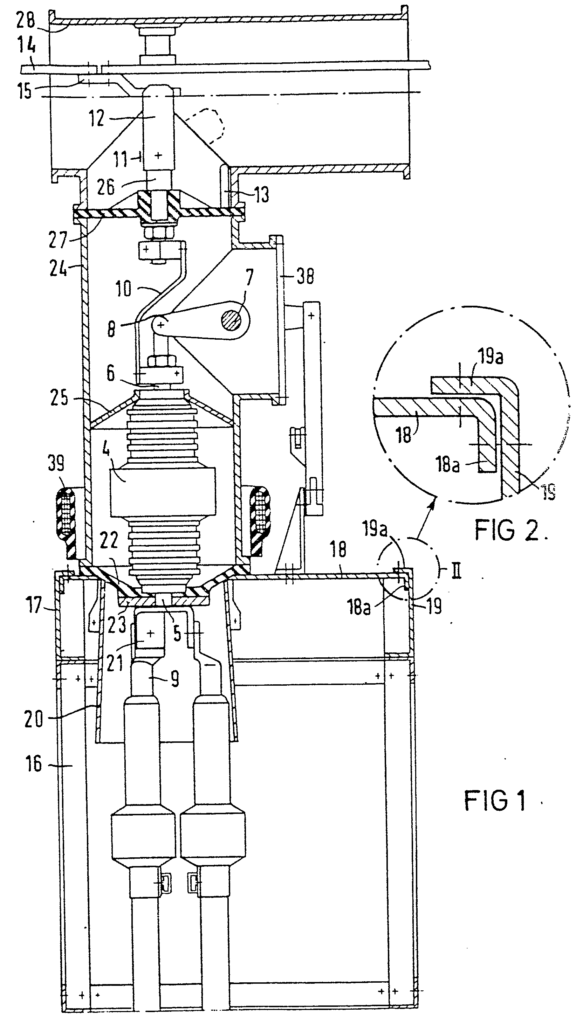

Figur 1 eine Frontansicht eines Schaltfeldes, teilweise im Schnitt,

Figur 2 eine vergrößerte Darstellung einer Einzelheit in Fig. 1.

Das dargestellte Schaltfeld besitzt eine isoliergasgefüllte Metallkapselung, die pro Phase mindestens eine Vakuumschaltröhre 4 umschließt.

Die Vakuumschaltröhre 4 ist von einem Behälter 24 umgeben, der einen Teil der Metallkapselung ist.

Ein Isolierstoffteller 25 zentriert die Vakuumschaltröhre 4 im Behälter 24.

Die Vakuumschaltröhre 4 besitzt einen axial ortsfesten Stromanschluß 5 und einen mittels eines an einer aus der Kapselung 24 herausgeführten Welle 7 angelenkten Hebels 8 axial beweglichen Stromanschluß 6. Ferner steht die Vakuumschaltröhre 4 einerseits mit einem Kabelanschluß 9 und andererseits über eine flexible Leitung 10 mit einem Trennschalter 11 in Verbindung.

Das bewegliche Schaltstück 12 des Trennschalters 11 ist innerhalb der Metallkapselung in ein mit der Metallkapselung verbundenes Erderkontaktstück 13 und in ein mit einer Sammelschiene 14 verbundenes Gegenkontaktstück 15 schwenkbar.

Der Kabelanschluß 9 ist in einem Luft als Isoliergas enthaltenden, allen Phasen gemeinsamen Untergestell 16 angeordnet.

Das Untergestell 16 trägt einen allen Phasen gemeinsamen Aufsatz 17, der ebenfalls Luft als Isoliergas enthält und aus einer Oberseite 18 und Seitenwänden 19 gebildet ist.

In den Aufsatz 17 ragen lotrecht gerichtete, axial teilbare Schirme 20 hinein, die auch in das Untergestell 16 eingreifen und dort phasenweise Schraubanschlußklemmen 21 der Kabelanschlüsse 9 umgeben.

Die Schirme 20 sind am oberen Ende an einer vom Aufsatz 17 getragenen Durchführungsplatte 22 lösbar befestigt. Auf der Unterseite der Durchführungsplatte 22 ist eine elektrisch leitende Platte 23 angeordnet, die mit den Kabelanschlüssen 9 verbunden ist.

Auf der Oberseite der Durchführungsplatte 22 ruht unter Zwischenlage je einer Dichtung das dem ortsfesten Stromanschluß 5 zugewandte Ende der Vakuumschaltröhre 4 und ein Ende des aufrechten Behälters 24.

Der aufrechte Behälter 24 trägt oben eine ihn gasdicht abschließende Schottplatte 27, welche von einem mit der flexiblen Leitung 10 verbundenen Bolzen 26 lotrecht durchgriffen ist.

Die Oberseite 18 des Aufsatzes 17 ist zwischen den Aufsatz-Seitenwänden 19 absenkbar angeordnet. Das Absenken der Oberseite des Aufsatzes und des von ihm getragenen Mittelteils des Schaltfeldes kann erfolgen, nachdem die flexible Leitung 10 vom Bolzen 26 gelöst und die Schraubanschlußklemmen 21 entfernt sind.

Abgesenkt ist die Oberseite 18 des Aufsatzes 17, samt der von ihr getragenen Teile des Schaltfeld-Mittelteils in Richtung der Frontseite des Schaltfeldes aus dem Aufsatz 17 herausziehbar. Diese Ausbildung ermöglicht die separate Montage, Justage und Inspektion des Schaltfeld-Mittelteils. Das Schaltfeld-Mittelteil kann somit im Herstellungsbetrieb schon vollkommen vormontiert und geprüft werden, während das Unterteil und das Oberteil des Schaltfeldes am Bestimmungsort des Schaltfeldes soweit vorgerichtet werden können, daß nur noch das Mittelteil einzufügen ist.

Wie in der Zeichnung strichpunktiert eingekreist gezeigt, weist die Oberseite 18 des Aufsatzes 17 einen nach unten gerichteten Rand 18a auf, der zur Versteifung der Oberseite dient und durch Rippen ersetzbar ist.

Die Ränder 19a der senkrecht zur Schaltfeld-Frontseite verlaufenden Seitenwände 19 des Aufsatzes 17 sind rechtwinklig einwärts gebogen und übergreifen die Oberseite 18 des Aufsatzes 17. Durch diese Ausbildung ist es möglich, die Oberseite 18 des Aufsatzes 17 an den einwärts gebogenen Rändern 19a der Seitenwände 19 zu befestigen, wie durch die lotrecht verlaufende, strichpunktierte Linie angedeutet. Die Oberseite 18 des Aufsatzes 17 kann auch an den senkrechten Abschnitten der Seitenwände 19 mittels waagrecht gerichteter Schrauben befestigt werden, welche den Rand des Oberteils 18 durchgreifen. Im letzteren Fall können in den senkrechten Abschnitten der Seitenwände 19 für den Durchgriff der Schrauben lotrechte Schlitze angeordnet sein (nicht dargestellt).

**Ansprüche**

. 1. Elektrisches Schaltfeld, mit einer isoliergasgefüllten Metallkapselung, die pro Phase mindestens eine Vakuumschaltröhre umschließt, welche von einem einen Teil der Metallkapselung bildenden Behälter umgeben und mittels eines Isolierstofftellers im Behälter zentriert ist sowie ferner einen axial ortsfesten Stromanschluß und einen mittels eines an einer aus der Kapselung herausgeführten Welle angelenkten Hebels axial beweglichen Stromanschluß aufweist und außerdem einerseits mit einem Kabelanschluß und andererseits über eine flexible Leitung mit einem Trennschalter in Verbindung steht, dessen bewegliches Schaltstück innerhalb der Metallkapselung in ein mit der Metallkapselung verbundenes Erderkontaktstück und in ein mit einer Sammelschiene verbundenes Gegenkontaktstück schwenkbar ist, wobei der Kabelanschluß in einem Luft als Isoliergas enthaltenden, allen Phasen gemeinsamen Untergestell angeordnet ist ; das einen allen Phasen gemeinsamen, ebenfalls Luft als Isoliergas enthaltenden, aus Seitenwänden und einer Oberseite gebildeten Aufsatz trägt, in den lotrecht gerichtete, axial teilbare Schirme hineinragen, die auch in das Untergestell eingreifen, dort phasenweise Schraubanschlußklemmen der Kabelanschlüsse umgeben und am oberen Ende an einer vom Aufsatz getragenen Durchführungsplatte lösbar befestigt sind, auf deren Unterseite eine mit den Kabelanschlüssen verbundene, elektrische leitende Platte angeordnet ist und auf deren Oberseite unter Zwischenlage je einer Dichtung das dem ortsfesten Stromanschluß zugewandte Ende der Vakuumschaltröhre und ein Ende des aufrechten Behälters ruht, der oben eine ihn gasdicht abschliessende Schottplatte trägt, welche von einem mit der flexiblen Leitung verbundenen Bolzen lotrecht durchgriffen ist, dadurch gekennzeichnet, daß die Oberseite (18) des Aufsatzes (27) zwischen den Aufsatz-Seitenwänden (19) absenkbar angeordnet ist.

2. Schaltfeld nach Anspruch 1, dadurch gekennzeichnet, daß die Oberseite (18) des Aufsatzes (17) zusammen mit den von ihr getragenen Teilen abgesenkt in Richtung der Frontseite der Schaltfeldes aus dem Aufsatz (17) herausziehbar ist.

3. Schaltfeld nach Anspruch 1 und 2, dadurch gekennzeichnet, daß die Oberseite (18) des Aufsatzes (17) einen nach unten gerichteten Rand (18a) aufweist und daß die Ränder (19a) der senkrecht zur Schaltfeld-Frontseite verlaufenden Seitenwände (19) des Aufsatzes (17) rechtwinklig einwärts gebogen sind und die Oberseite (18) des Aufsatzes (17) übergreifen.

4. Schaltfeld nach Anspruch 1 bis 3, dadurch gekennzeichnet, daß die Oberseite (18) des Aufsatzes (17) wahlweise an den einwärts gebogenen Rändern (19a) der Seitenwände (19) oder an den senkrechten Abschnitten der Seitenwände (19) befestigbar ist.

**Claims**

1. An electric switching field comprising a metal casing filled with insulating gas and surrounding at least one vacuum switching tube per phase, which vacuum switching tube is surrounded by a container forming a part of the metal casing and is centered in the container by means of an insulant plate and further has an axially stationary current connector and a current connector axially movable by means of a lever hinged to a shaft protruding from the casing, and which vacuum switching tube is further connected on one side to a cable connection and on the other side via a flexible line to a separating switch whose moving switch member can be pivoted into a ground contact piece which is connected to the metal casing and into a counter-contact piece connected to a bus bar, within the metal casing, wherein the cable connection is arranged in an underframe which is common to all phases and contains air as insulating gas ; the underframe supports an attachment formed from side walls and an upper side and common to all phases and which likewise contains air as insulating gas and into which vertically directed, axially separable screens project, which screens also engage into the underframe, surround the screw terminals of the cable connections phase-wise and are detachably secured to the upper end on a feedthrough plate, on whose underside is arranged an electrically conducting plate connected to the cable connections on whose upper side rest the end of the vacuum switching tube facing the stationary current connection and an end of the upright container, respectively interpositioning a seal, which container supports a separation plate at the top, which separation plate seals the container so as to be gastight, and which is vertically penetrated by a bolt connected to the flexible line, characterised in that the upper side (18) of the attachment (17) is arranged so that it can be lowered between the side walls (19) of the attachment.

2. A switching field as claimed in Claim 1, characterised in that the upper side (18) of the attachment (17) together with the parts which are supported by this upper side can be removed from the attachment (17) in a lowered fashion in the direction of the front side of the switching field.

3. A switching field as claimed in Claim 1 and 2, characterised in that the upper side (18) of the attachment (17) is provided with a downwardly directed edge (18a) and that the edges (19a) of the side walls (19) of the attachment (17) which extend perpendicular to the front side of the switching field are bent inwardly at right angles and overlap the upper side (18) of the attachment (17).

4. A switching field as claimed in Claim 1 to 3, characterised in that the upper side (18) of the attachment (17) can be alternatively secured to the inwardly bent edges (19a) of the side walls (19) or to the vertical sections of the side walls (19).

**Revendications**

1. Installation électrique de commutation, du type comportant un blindage métallique à remplissage d'un gaz isolant, qui comprend, par phase, au moins un tube de commutation sous vide entouré par une partie de la cuve formant blindage et centré dans la cuve au moyen d'un plateau en un matériau isolant, et qui comporte, en outre, une borne de raccordement axialement fixe et une borne de raccordement mobile axialement à l'aide d'un levier articulé sur un arbre sortant du blindage et fixée d'autre part, par l'intermédiaire d'un conducteur électrique flexible, un sectionneur dont la pièce de contact mobile est susceptible de basculer, à l'intérieur du blindage, dans une pièce de contact de terre reliée au blindage et dans une pièce de contact antagoniste reliée à la barre omnibus, la connexion de câble étant disposée dans un bâti sous-jacent commun à toutes les phases, contenant de l'air comme gaz isolant et portant un bâti surajouté commun à toutes les phases, contenant également de l'air comme gaz isolant, constitué par des parois latérales et par un côté supérieur, et dans lequel pénètrent des écrans divisibles axialement et qui s'étendent également dans le bâti sous-jacent, qui entoure, phase par phase, des bornes de raccordement à vis des connexions de câbles et sont fixées, de façon amovible à une plaque de traversée portée par le bâti surajouté et sur la face supérieure de laquelle est disposée une plaque électriquement conductrice, reliée aux connexions de câbles alors que sur sa face supérieure reposent, avec insertion d'une garniture de joints, l'extrémité du tube de commutation sous vide, voisine de la borne de raccordement fixe et une extrémité de la cuve, en position redressée, qui porte, dans le haut, une plaque la fermant de façon étanche aux gaz et qui est traversée perpendiculairement par un boulon qui est relié à la liaison électrique flexible, caractérisée par le fait que le côté supérieur (18) du bâti surajouté (17) est disposé de manière à pouvoir être abaissé entre les parois latérales (19) de ce dernier.

2. Installation électrique de commutation selon la revendication 1, caractérisée par le fait que le côté supérieur (18) du bâti surajouté (17) est susceptible d'être extrait de ce dernier, en direction du côté frontal de l'installation électrique de commutation, avec les éléments portés par ledit côté supérieur (18).

3. Installation électrique de commutation selon les revendications 1 et 2, caractérisé par le fait que le côté supérieur (18) du bâti surajouté (17) comporte un bord (18a) dirigé vers le bas, et que les bords (19a) des parois latérales (19) du bâti surajouté (17) et qui s'étendent perpendiculairement au côté frontal de l'installation électrique de commutation, sont repliés à angle droit vers l'intérieur et passent sur le côté supérieur (18) du bâti surajouté (17).

4. Installation électrique de commutation selon les revendications 1 à 3, caractérisée par le fait que le côté supérieur (18) du bâti surajouté (17) est susceptible d'être fixé, au choix, aux bords (19a) pliés vers l'intérieur des parois latérales (19), ou aux sections perpendiculaires des parois latérales (19).

0 024 494

FIG 2.

FIG 1